# EUROPÄISCHE PATENTANMELDUNG

(11) **EP 0 945 050 A1**
(43) Veröffentlichungstag der Anmeldung: **29.09.1999**
(21) Anmeldenummer: 99105578.1
(22) Anmeldetag: 18.03.1999
(51) Int. Cl.: A01D 33/02

(54) **Kartoffelerntemaschine**

(30) Priorität: 27.03.1998 DE 19813647
(71) Anmelder: Franz Grimme Landmaschinenfabrik GmbH & Co. KG., D-49401 Damme (DE)
(72) Erfinder: Kalverkamp, Klemens, 49401 Damme (DE)
(74) Vertreter: Busse & Busse Patentanwälte

(57) **Zusammenfassung**

Eine Kartoffelerntemaschine (1) mit einer Aufnahmevorrichtung (2) für zumindest einen Kartoffeldamm (3), einer sich an die Aufnahmevorrichtung (2) anschließenden Siebfördervorrichtung (4), insbesondere einem Siebförderband (7), und einer Krauttrennvorrichtung (8), wird so ausgebildet, daß die Krauttrennvorrichtung (8) oberhalb des Arbeitstrums der Siebfördervorrichtung (4) angeordnet ist.

## Beschreibung

Die Erfindung bezieht sich auf eine Kartoffelerntemaschine nach dem Oberbegriff des Anspruchs 1.

Zum Ernten von Kartoffeln werden üblicherweise Dämme, in denen die Kartoffeln enthalten sind und aus denen oberseitig ein Krautanteil herausragt, von einer Aufnahmevorrichtung aufgenommen und einer dieser nachgeordneten Siebfördervorrichtung zugeführt, auf der die die Kartoffeln umgebende Erdkrume von den Kartoffeln abgesiebt wird. In der Erntemaschine sind die Kartoffeln weiterhin von dem Krautanteil zu trennen. Hierzu ist eine Krauttrennvorrichtung vorgesehen, die beispielsweise am Ende der Siebfördervorrichtung angeordnet ist.

Der Erfindung liegt das Problem zugrunde, eine Kartoffelerntemaschine zu schaffen, bei der die Trennung der Kartoffeln von Kraut und Erdreich verbessert ist.

Die Erfindung löst dieses Problem mit den Merkmalen des Anspruches 1. Hinsichtlich weiterer vorteilhafter Ausgestaltungen wird auf die Ansprüche 2 bis 12 verwiesen.

Durch die Anordnung der Krauttrennvorrichtung oberhalb des Arbeitstrums der Siebfördervorrichtung, insbesondere eines Siebförderbandes, ist eine effektive Trennung der Kartoffeln von dem Krautanteil gewährleistet. Der Krautanteil wird in der ursprünglichen Grundorientierung der Kartoffeln und ihres Krauts, das nach oben aus dem Erddamm herausragt, erfaßt, bevor Kraut und Kartoffeln eine durchgreifende Lageveränderung erfahren. Durch die aufwärtsgerichtete Zugbewegung werden gleichzeitig die Kartoffeln angehoben, wodurch die Absiebung des Erdreichs verbessert wird. Eine derartige Krauttrennvorrichtung kann dem Siebförderband im vorderen Bereich zugeordnet sein, so daß die Trennung der Kartoffeln von Kraut frühzeitig erfolgt.

Besonders vorteilhaft ist die Krauttrennvorrichtung höhenvariabel und einstellbar oberhalb des Siebförderbandes gehalten, wodurch eine Anpassung an die jeweilige Dicke des oder der aufgenommenen Dämme möglich ist. Bei Anordnung eines Tastorgans zur Ermittlung des optimalen Höhenabstandes zwischen dem aufgenommenen Damm und der Krauttrennvorrichtung kann eine laufende Anpassung während des Betriebes erfolgen.

Bei Anordnung zumindest einer Schlegelwalze zur Zerkleinerung und Weiterförderung des aufgenommenen Krauts ergibt sich eine zusätzliche Sogwirkung für das Kraut, was die Abtrennung des Krautanteils von den Kartoffeln weiter verbessert.

Weitere Vorteile und Einzelheiten ergeben sich aus in der Zeichnung dargestellten, nachfolgend beschriebenen Ausführungsbeispielen des Gegenstandes der Erfindung.

In der Zeichnung zeigt:

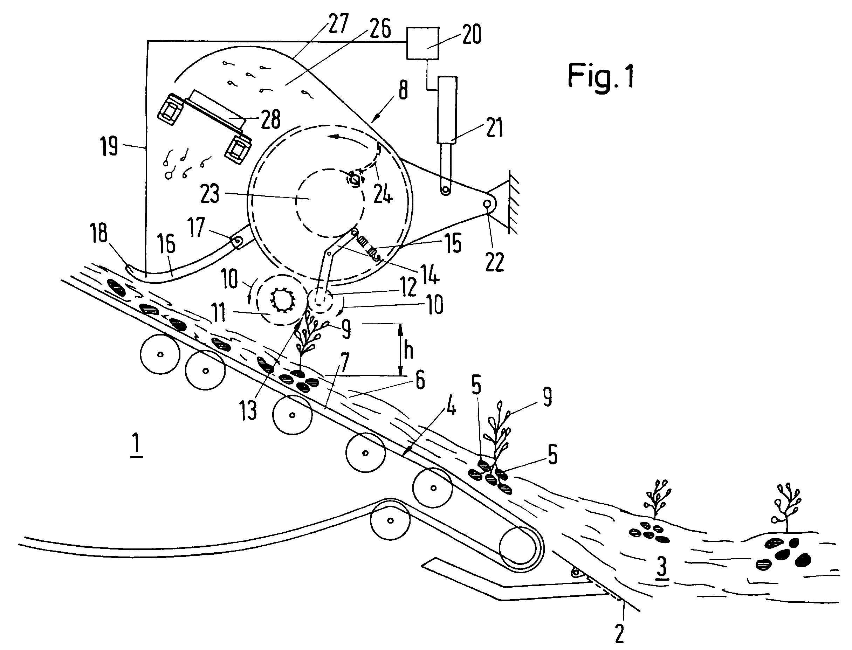

- Fig. 1: eine schematisierte Seitenansicht der Kartoffelerntemaschine,

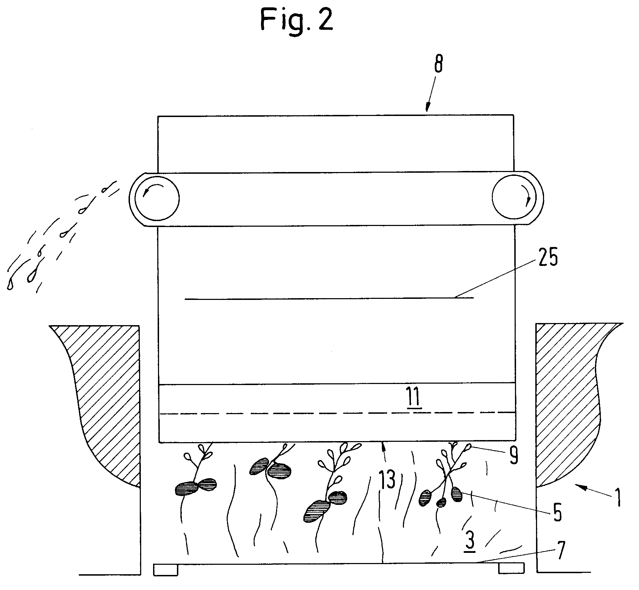

- Fig. 2: eine Ansicht des Teils nach Fig. 1 von hinten,

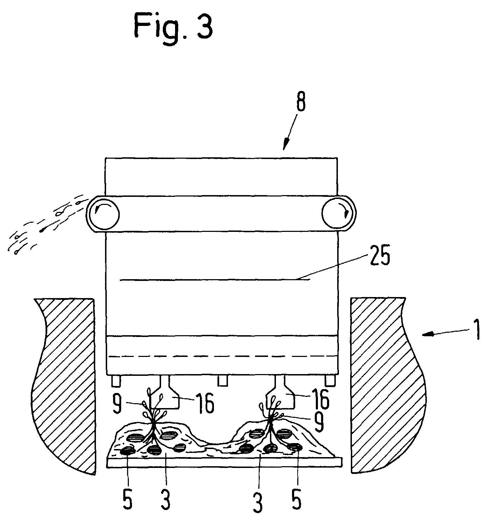

- Fig. 3: eine ähnliche Ansicht wie Fig. 2 mit einem für die Aufnahme von zwei Dämmen vorgesehenen Siebförderband,
- Fig. 4: eine ähnliche Ansicht wie Fig. 1, bei der die Krauttrennvorrichtung einer oberen Übergabestelle der Kartoffeln zugeordnet ist,
- Fig. 5: eine ähnliche Ansicht wie Fig. 4, bei der die Krauttrennvorrichtung einem nahe dem Aufnahmebereich befindlichen unteren Ende des Siebförderbandes zugeordnet ist,
- Fig. 6: eine alternative Anordnung einer Krauttrennvorrichtung mit parallel zur Förderrichtung ausgerichteten Walzen,
- Fig. 7: eine Detailansicht der Krauttrennvorrichtung nach Fig. 6 oberhalb des zu fördernden Dammes,
- Fig. 8: das Teil nach Fig. 7 in Ansicht von hinten.

Im einzelnen weist die Kartoffelerntemaschine 1 eine Aufnahmevorrichtung 2 zur Aufnahme eines oder mehrerer Kartoffeldämme 3 auf, der eine Siebfördervorrichtung 4 nachgeordnet ist, die den oder die aufgenommenen Dämme übernimmt und innerhalb der Kartoffelerntemaschine 1 weiterbefördert. Während der Weiterbeförderung werden die Kartoffeln 5 durch Siebung weitgehend von der sie umgebenden Erde 6 getrennt. Hierzu ist vorgesehen, daß die Siebfördervorrichtung 4 ein Siebförderband 7 oder dergleichen umfaßt, das eine hinreichende Maschenweite aufweist, um die Erde nach unten hindurchtreten zu lassen, wobei die Kartoffeln 5 auf dem Siebförderband 7 verbleiben. Anstelle eines Siebförderbandes 7 kömmen auch andere Förderer, beispielsweise Walzenförderer, in Frage, die einen Durchtritt der Erde nach unten erlauben.

Oberhalb des Siebförderbandes 7 ist eine Krauttrennvorrichtung 8 angeordnet, die die in der Erde 6 befindlichen Kartoffeln 5 von ihrem aufwärts ragenden Krautanteil 9 trennt.

Die Krauttrennvorrichtung 8 weist zwei parallel zueinander ausgerichtete und einander gegenüberliegende, in Richtung der Pfeile 10 gegenläufig angetriebene Walzen 11,12 auf, die zwischen sich einen Krauteintrittsspalt 13 begrenzen.

In einem ersten Ausführungsbeispiel sind die Walzen 11,12 quer zur Förderrichtung des Ernteguts angeordnet. Die in Förderrichtung nachgeordnete Walze 11 ist als Sternradwalze ausgebildet, die im wesentlichen radial nach außen vorstehende Förderfinger aufweist. Entlang dem Walzenumfang der Sternradwalze 11 können verschiedene Verformungs- und Verlagerungszonen durch unterschiedliche Gestaltung der Förderfinger ausgebildet sein. Beispielsweise können ein oder mehrere Förderfinger 29 gegenüber den anderen verlängert sein, um auf diese Weise eine unterschiedliche Einwirkung auf Kraut 9 und in diesem enthaltene Erdbestandteile oder Steine sicherzustellen.

Die vordere, der Sternradwalze 11 gegenübergelegene Walze 12 ist als Glattwalze ausgebildet und an einer Schwinge 14, die über eine Feder 15 gehalten ist, festgelegt. Dadurch ist der Eintrittsspalt 13 hinsichtlich seiner Breite variabel. Zudem ist die Höhe h der Krauttrennvorrichtung 8 oberhalb des aufgenommenen Dammes 3 variabel einstellbar. Die Höhe h ist dabei in Abhängigkeit der Dicke des aufgenommenen Dammes 3 einzustellen, um eine optimierte Trennung des Krautanteils 9 von den Kartoffeln 5 zu erhalten und gleichzeitig sicherzustellen, daß die Kartoffeln 5 nur angehoben werden, ohne daß sie in den Eintrittsspalt 13 der Krauttrennvorrichtung 8 eindringen. Zur Höheneinstellung ist der Krauttrennvorrichtung 8 ein Tastorgan 16 zugeordnet, das sich in Richtung des auf dem Siebförderband 7 befindlichen Ernteguts erstreckt. Bei Aufnahme mehrerer Dämme 3 können mehrere Tastorgane 16 für die einzelnen Dämme 3 vorgesehen werden. Das Tastorgan 16 ist an einer Achse 17 schwenkbar gelagert und liegt mit seinem Ende 18 an dem Erntegut auf. Der Schwenkwinkel des Tastorgans 16 wird als elektrisches Signal gemessen und über eine Leitung 19 einer Steuereinheit 20 zugeleitet, die ihrerseits ein Verstellorgan 21, beispielsweise einen Hydraulikzylinder, ansteuert, um dadurch die Höhe der Krauttrennvorrichtung 8 durch Verschwenken um die Achse 22 zu variieren. In Betriebsstellung sind die den Eintrittsspalt begrenzenden Walzen 11,12 möglichst dicht oberhalb des aufgenommenen Ernteguts gehalten, der Abstand sollte geringer als ca. 30cm sein.

Durch die den Eintrittsspalt 13 begrenzenden Walzen 11,12 findet eine Zerteilung des Krauts 9 in der Regel noch nicht statt, auch die Förderfinger der Sternradwalze 11 sind nachgiebig ausgebildet, um ein vollständiges Greifen des Krauts ohne dessen Abtrennung sicherzustellen. Oberhalb der Walzen 11,12 befindet sich zumindest eine Schlegelwalze 23 zur Zerkleinerung und Weiterförderung des aufgenommenen Krauts 9. Die Schlegelwalze 23 läuft gegenüber den Walzen 11,12 mit einer erhöhten Umlaufgeschwindigkeit um, beispielsweise mit ca. 1000 U/min gegenüber 200 - 500 U/min der Walzen 11,12. Es kommt auch eine Anordnung von mehreren Schlegelwalzen 23 in Frage. Die Schlegel 24 sind über den axialen Verlauf 25 der Schlegelwalze 23 spiralförmig versetzt angeordnet. Dadurch ergibt sich eine Vergleichmäßigung der Sogwirkung auf das einzuziehende Kraut 9, auch langstielige Krautanteile 9 werden dadurch optimiert in den Eintrittsspalt 13 eingezogen. Der Schlegelwalze 23 ist eine Abwurfvorrichtung 26 nachgeordnet, die oberseitig von einem einen Auswurfkanal begrenzenden Randblech 27 und unterseitig von einem Förderband 28 begrenzt ist, wobei das Förderband 28 das durch die Schlegel 24 herangeförderte Gut seitlich der Kartoffelerntemaschine 1 auswirft. Hierzu ist das Förderband 28 in Querrichtung zum Arbeitstrum des Siebförderbandes 7 angeordnet.

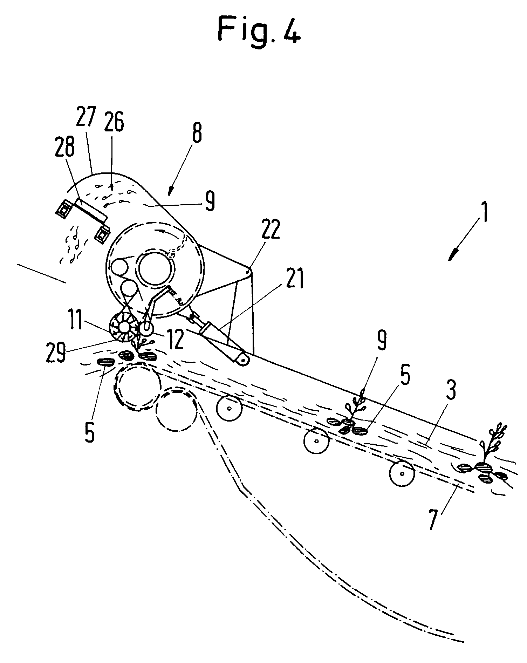

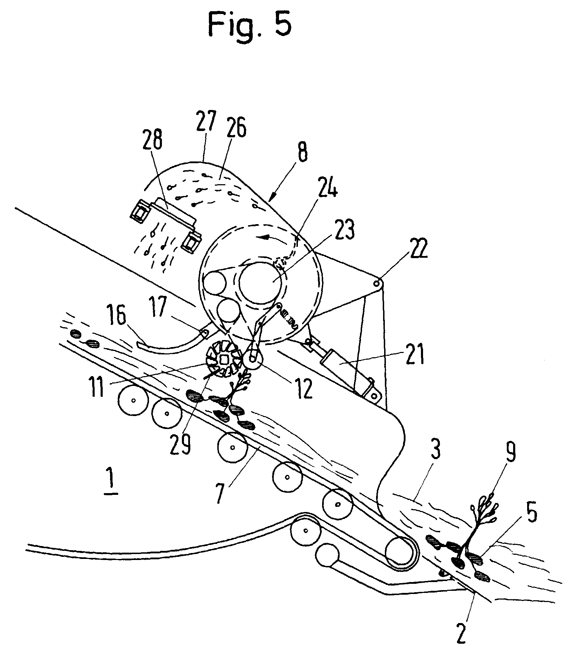

Die Anordnung der Krauttrennvorrichtung 8 bezüglich des Arbeitstrums des Siebförderbandes 7 ist variabel. In Fig. 4 ist eine Anordnung nahe einem oberseitigen Übergabebereich des aufgenommenen Ernteguts gezeigt, in Fig. 5 ist eine Anordnung der Krauttrennvorrichtung nahe der Aufnahmevorrichtung 2 dargestellt. Diese Anordnung hat den Vorteil, daß frühzeitig eine gute Durchmischung der Erde durch Anheben der Kartoffeln 5 stattfindet und insofern das Aussieben im weiteren Verlauf des Siebförderbandes 7 verbessert ist.

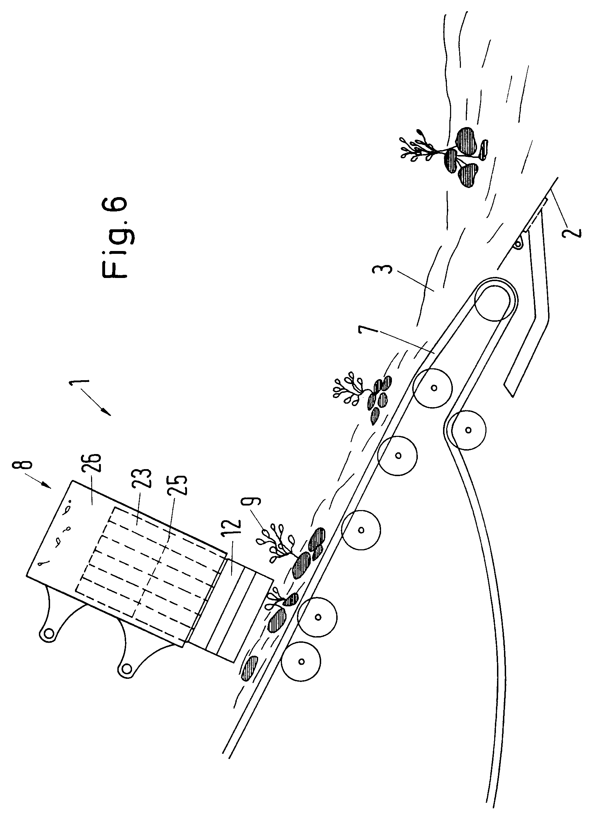

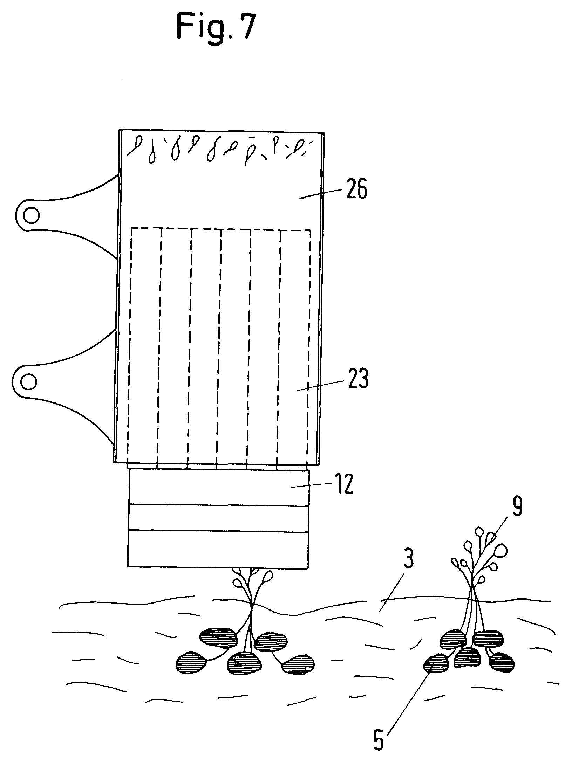

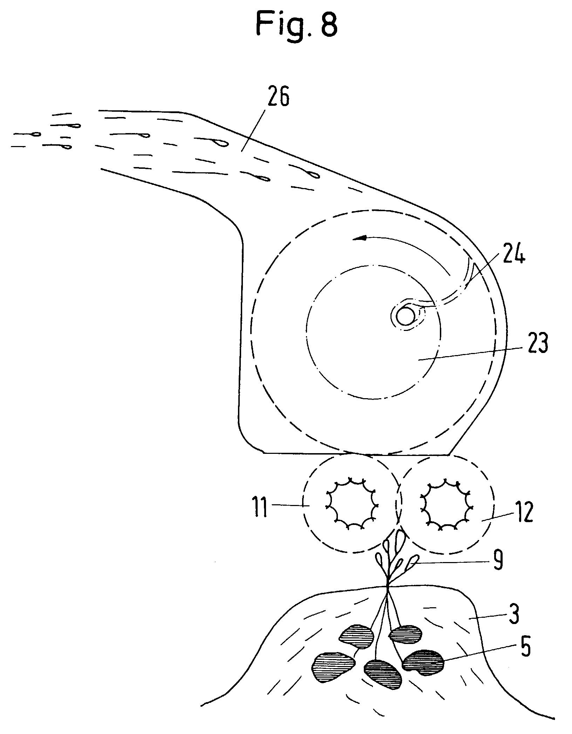

In einer zweiten Ausführung der Erfindung sind die Walzen 11,12 in Längsrichtung des aufgenommenen Dammes 3 angeordnet (Fig. 6 bis Fig. 8) der Auswurfkanal 26 bedarf dann durch die ebenfalls längs angeordnete Schlegelwalze 23 keines weiteren Förderbandes, das geförderte und zerkleinerte Kraut wird unmittelbar seitlich ausgeworfen. Bei dieser Anordnung sind die Walzen 11,12 vorzugsweise gleichartig zu gestalten.

## Patentansprüche

1. Kartoffelerntemaschine (1) mit einer Aufnahmevorrichtung (2) für zumindest einen Kartoffeldamm (3), einer sich an die Aufnahmevorrichtung (2) anschließenden Siebfördervorrichtung (4), insbesondere einem Siebförderband (7), und einer Krauttrennvorrichtung (8), **dadurch gekennzeichnet,** daß die Krauttrennvorrichtung (8) oberhalb des Arbeitstrums der Siebfördervorrichtung (4) angeordnet ist.

2. Kartoffelerntemaschine nach Anspruch 1, **dadurch gekennzeichnet,** daß die Krauttrennvorrichtung (8) höhenvariabel oberhalb der Siebfördervorrichtung (4) gehalten ist und die Höhe (h) in Abhängigkeit von der Dicke eines auf der Siebfördervorrichtung (4) befindlichen Kartoffeldamms (3) einstellbar ist.

3. Kartoffelerntemaschine nach Anspruch 2, **gekennzeichnet durch** ein sich von der Krauttrennvorrichtung (8) zum Erntegut erstreckendes Tastorgan (16).

4. Kartoffelerntemaschine nach einem der Ansprüche 1 bis 3, **dadurch gekennzeichnet,** daß die Krauttrennvorrichtung (8) zwei parallel zueinander ausgerichtete und einander gegenüberliegende gegenläufig angetrieben umlaufende Walzen (11;12) aufweist, die einen Krauteintrittsspalt (13) begrenzen.

5. Kartoffelerntemaschine nach Anspruch 4, **dadurch gekennzeichnet,** daß die Walzen (11;12) quer zur Förderrichtung des Ernteguts angeordnet sind.

6. Kartoffelerntemaschine nach einem der Ansprüche **4 oder 5, dadurch ge****kennzeichnet,** daß zumindest eine (11) der den Eintrittsspalt (13) begrenzenden Walzen (11;12) als Sternradwalze ausgebildet ist, die im wesentlichen radial nach außen vorstehende Förderfinger aufweist.

7. Kartoffelerntemaschine nach Anspruch 6, **dadurch gekennzeichnet,** daß die Sternradwalze (11) zumindest einen die Lange anderer Förderfinger überragenden Förderfinger (29) aufweist.

8. Kartoffelerntemaschine nach einem der Ansprüche 6 oder 7, **dadurch gekennzeichnet,** daß die der Sternradwalze (11) gegenüberliegende Walze (12) eine Glattwalze ist.

9. Kartoffelerntemaschine nach einem der Ansprüche 1 bis 8, **dadurch gekennzeichnet,** daß die Krauttrennvorrichtung (8) oberhalb des Walzenpaares (11;12) zumindest eine Schlegelwalze (23) zur Zerkleinerung und Weiterförderung des aufgenommenen Krauts (9) umfaßt.

10. Kartoffelerntemaschine nach Anspruch 9, **dadurch gekennzeichnet,** daß die Schlegel (24) spiralförmig über den axialen Verlauf (25) der Schlegelwalze (23) versetzt angeordnet sind.

11. Kartoffelerntemaschine nach Anspruch 10, **dadurch gekennzeichnet,** daß die Schlegelwalze (23) eine Sogwirkung auf das in den Eintrittsspalt (13) eintretende Kraut (9) ausübt.

12. Kartoffelerntemaschine nach einem der Ansprüche 1 bis 11, **dadurch gekennzeichnet,** daß der Schlegelwalze (23) eine Abwurfvorrichtung (26) nachgeordnet ist, die das Kraut (9) seitlich neben der Siebfördervorrichtung (4) ablegt.

13. Kartoffelerntemaschine nach Anspruch 12, **dadurch gekennzeichnet,** daß die Abwurfvorrichtung (26) ein Querförderband (28) umfaßt.
